# EUROPEAN PATENT SPECIFICATION

(11) **EP 1 510 905 B1**
(45) Date of publication and mention of the grant of the patent: **22.03.2006**
(21) Application number: 03019866.7
(22) Date of filing: 01.09.2003
(51) Int. Cl.: G06F 1/16, H04M 1/02

(54) **Handheld Electronic Device having Shiftable Pivot Structure**
Tragbares elektronisches Gerät mit verschieb- und drehbarer Struktur
Dispositif électronique portable ayant une structure articulée et coulissante

(43) Date of publication of application: 02.03.2005
(73) Proprietor: High Tech Computer Corp., Tao Yuan (TW)
(72) Inventor: Shiue, Jih-Jong, Sinyi District, Taipei City 110 (TW); Tsai, Chien-Li, Beitou District, Taipei City 112 (TW)
(74) Representative: Becker Kurig Straus

(56) References cited:
- EP-A- 1 312 999
- US-A- 5 168 426
- US-A- 6 002 764
- PATENT ABSTRACTS OF JAPAN vol. 1998, no. 02, 30 January 1998 (1998-01-30) & JP 09 284368 A (SONY CORP), 31 October 1997 (1997-10-31)
- PATENT ABSTRACTS OF JAPAN vol. 2003, no. 06, 3 June 2003 (2003-06-03) & JP 2003 044169 A (CASIO COMPUT CO LTD), 14 February 2003 (2003-02-14)

## Description

### BACKGROUND OF THE INVENTION

### Field of Invention

The present invention relates to a handheld electronic device. More particularly, the present invention relates to a handheld communication device having a shiftable pivot structure slideably and pivotably interconnecting a base and a cover of the handheld communication device.

### Description of Related Art

Handheld electronic devices are gadgets that are portable and small in size, for example, mobile phone, pocket Personal Computer (pocket PC), Personal Digital Assistant (PDA), or portable Personal Computer (portable PC), are all classified. Thus handheld electronic devices have become one of the most popular high-tech commercial products for convenience, effectiveness, as well as better quality of mobile communication are brought in the fields of wireless communication and Internet.

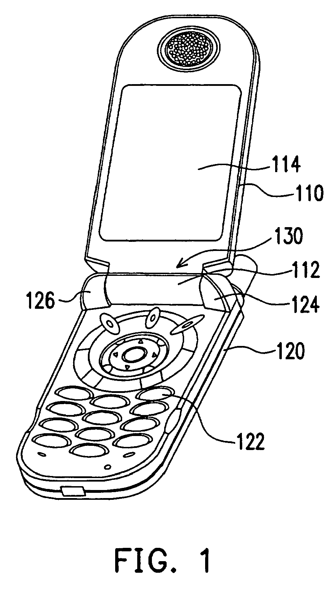

**Fig. 1** is a stereogram showing a conventional flip-cover handheld electronic device having a pivot structure **130** pivotably interconnecting a cover **110** and a base **120** thereof. The handheld electronic device in the shown example is a mobile phone. The cover **110** comprises a pivot shaft **112,** whereas the base **120** comprises a pair of corresponding pivot joints **124** and **126** engaging with the ends of the pivoting shaft **112,** so that the cover **110** is able to pivot relative to the base **120.** When a user lifts up the cover **110,** a display screen **114** on the cover **110** shows all talk functions, whereas the user may press the numerical keypad **122** or other functional keys, or answer calls to make conversation with the other party. Thus, the cover **110** not only protects the display screen from inexpectant external impact, but also miniaturizes the size of mobile phone so as to keep up with the current trend for portable products.

Note that one disadvantage of deploying this fixed pivot structure **130** is that the pivoting shaft **112** is exposed when the cover **110** is closed so that the pivoting shaft **112** is vulnerable regarding external impact. Once the pivoting shaft **112** is critically damaged, a user can no longer flip open the cover **110** to conduct talk function. In addition, the exposure of the pivoting shaft **112** outside the cover **110** and the base **120** as well degrades neatness and aesthetics of appearance.

Another implementation of multifunctional cover mobile communication device telephone is disclose in the european patent Application EP 1 312 999. This document discloses a slidable display unit that in a closed end-position covers a keyboard below said display. In an open end-position of the slidable display said keyboard is exposed. In the open end-position the slidabel display can be inclined towards a user with a tilting movement.

### SUMMARY OF THE INVENTION

Accordingly, one object of the present invention is to provide a handheld electronic device with the features of claim 1 and a method of using a handheld wireless communication device with the features of claim 5.

The design not only protects the pivot structure against external impact, but also provides a better appearance of the device.

To achieve these and other advantages and in accordance with the purpose of the invention, as embodied and broadly described herein, the invention provides a handheld electronic device having a shiftable pivot structure for connecting a flip cover to a base. The base comprises a pivotal accommodation groove and the cover comprises a second pivot sleeve. The shiftable pivot structure mainly comprises a sliding axle and a shaft, where the sliding axle is accommodated to the pivotal accommodation groove. The sliding axle further comprises a lever and two first pivot sleeves. The two ends of the lever are located on the interior sidewalls of the pivotal accommodation groove. In addition, the two first pivot sleeves extend from two sides of the lever, respectively, to form a U-shaped pivot bearing. The sliding axle is designed movable within the pivotal accommodation groove, which provides sufficient space for accommodating the two first pivot sleeves for full retraction. Moreover, the shaft extends in the two first pivot sleeves and the second pivot sleeve to serve as a pivot joining the first and second pivot sleeves together.

The sliding axle is capable of being shifted outwardly so that the two first pivot sleeves are stationed outside an opening defined by the pivotal accommodation groove extending through a front end of the base. At this position, the cover can be pivoted relative to the base to an open position in which the handheld electronic device can be operated by a user of the device. After the operation, the cover is pivoted toward to the cover to a closed position. Then, the slide axle is shifted inwardly in the pivotal accommodation groove to a position in which the two first pivot sleeves are completely received in the pivotal accommodation groove. At this position the handheld electronic device cannot be operated, the shiftable pivot structure is totally hidden in the pivotal accommodation groove, and the cover is incapable of being pivoted relative to the base.

According to one embodiment of this invention, the base and the cover are fabricated using a material such as plastic or metallic substance. The pivotal accommodation groove in the base is formed as an integrative unit by punching or molding the base, for example.

In this invention, the first and second pivot sleeves and the pivot shaft can be hidden within the pivotal accommodation groove when the flip-cover is closed. Thus, the pivot structure in this present invention is protected from any external impact as well as has smooth and aesthetically appealing appearance when the device is at a closed position. Moreover, the cover is lifted for communication inasmuch as the shiftable character of the sliding axle wherein the first and second pivot sleeves and the shaft are moved to protrude beyond the base thereof.

It is to be understood that both the foregoing general description and the following detailed description are exemplary, and are intended to provide further explanation of the invention as claimed.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.

**Fig. 1** is a stereogram showing a handheld electronic device having a conventional pivot structure.

**Figs. 2A** and **2B** are stereograms respectively showing an exploded and an assembled view of a handheld electronic device having a shiftable pivot structure according to one preferred embodiment of this invention.

**Figs. 3A** through **3C** are side views respectively showing different positions of a cover relative to a base of the handheld electronic device in accordance with the preferred embodiment of the present invention.

### DESCRIPTION OF THE PREFERRED EMBODIMENT

Reference will now be made in detail to the present preferred embodiment of the invention, example of which is illustrated in the accompanying drawings. Wherever possible, the same reference numbers are used in the drawings and the description to refer to the same or like parts.

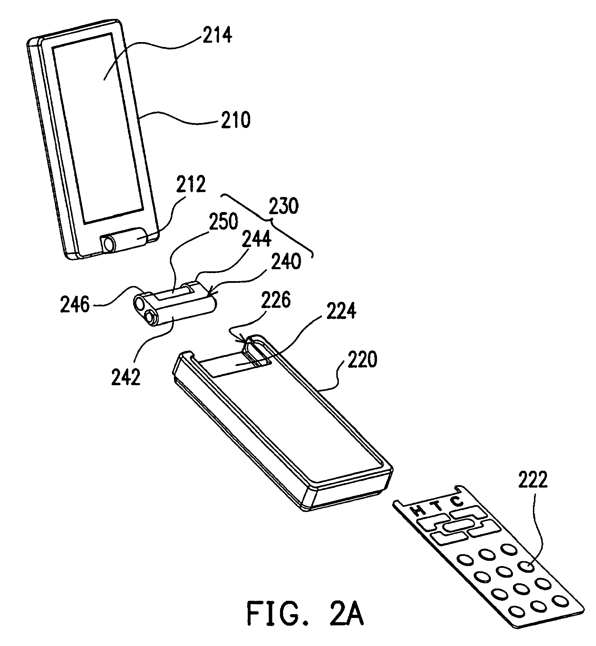

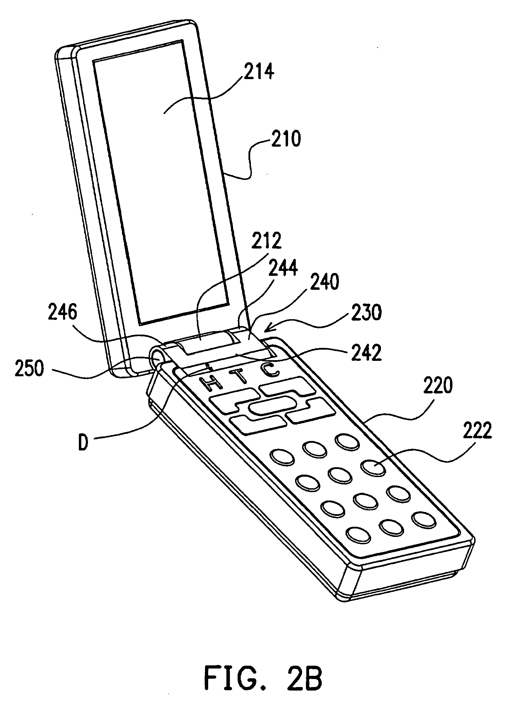

Referring to **Figs. 2A** and **2B,** the handheld electronic device according to one preferred embodiment of this invention is a handheld wireless communication device, i.e., more specifically, a mobile phone. As shown in **Figs. 2A** and **2B,** the device has a cover **210** and a base **220** assembled together via a shiftable pivot structure **230.** The shiftable pivot structure **230** comprises a sliding axle **240** and a shaft **250.** The base **220** comprises a pivotal accommodation groove **224,** which is a fillister on the surface of the base **220.** The pivotal accommodation groove **224** also is extended to a front wall of the base **220** to form an opening **226.** Note that the pivotal accommodation groove **224** is formed as an integrative unit with the base **220** by punching or molding, for example, while the base **220** and the cover **210** are fabricated using a plastic or a metallic substance, for example.

The sliding axle **240** accommodated to the pivotal accommodation groove **224** comprises a lever **242** with two lateral ends respectively latched to the interior sidewalls of the pivotal accommodation groove **224,** and two pivot sleeves **244** and **246** extending forwardly from the two ends of the lever 242. The pivot sleeves **244** and **246** define holes (not labeled) which are aligned with each other. The pivot sleeves **244** and **246** and the lever **242** together form a U-shaped pivot bearing. In addition, another pivot sleeve **212** is attached to a bottom of the cover **210.** The pivot sleeve **212** fits in a gap (not labeled) between the two pivot sleeves **244** and **246** of the sliding axle **240.** The shaft **250** extends in the two pivot sleeves **244, 246** of the sliding axle **240,** and the pivot sleeve **212** of the cover **210.** The shaft **250** is fixed to the pivot sleeves **244, 246** while the pivot sleeve **212** can rotate about the shaft **250** so that the cover **210** can pivot relative to the sliding axle **240** and the base **220.** Accordingly, the a structure in accordance with the present invention which can both slide in the base **220** and pivotably connect with the cover **210** is formed.

As shown in **Fig. 2B,** the cover **210** that is hinged to the base **220** via the shiftable pivot structure **230** comprises the sliding axle **240** and the shaft **250.** The two pivot sleeves **244, 246** of the sliding axle **240** are stationed outside the opening **226** provided that the lever **242** of the sliding axle **240** is shifted outwardly from an inner side of the pivotal accommodation groove **224** by a distance D. At this position, the cover **210** is free to pivot relative to the base **220.** Thus, when a user flips open the cover **210,** a display screen **214** on the cover **210** shows communication functions thereof. In the meantime, the user is also free to press any numerical keypad **222** or other functional keys on the keypad on the base **220,** as well as to make conversation with another party.

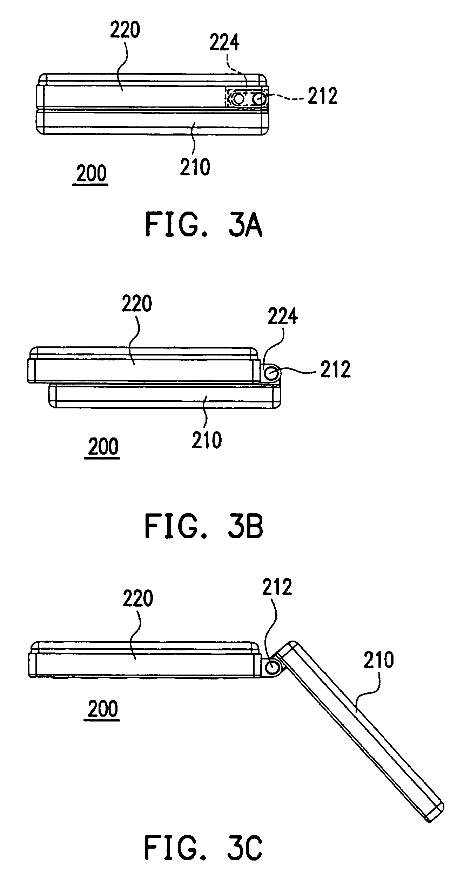

In **Fig. 3A,** the cover **210** is at close mode, wherein the shiftable pivot structure **230** and the pivot sleeve **212** are hidden within the pivotal accommodation groove **224** of the base **220.** Thus, the shiftable pivot structure **230** and the pivot sleeve **212** are covered and protected from impact, and the neatness of the handheld electronic device **200** is created as well. In **Fig. 3B,** the cover **210** together with the sliding axle **240** is shifted forwardly relatively to the base 220 the distance D so that the pivot sleeve **212** protrudes beyond the base **220.** In **Fig. 3C,** the cover **210** of the handheld electronic device **200** is flipped open to be ready for communication.

Accordingly, this invention provides a shiftable pivot structure for joining a cover and a base of a handheld electronic device together. The base has a pivotal accommodation groove and the cover has a second pivot joint (for example, the pivot sleeve **212).** The shiftable pivot structure at least includes a sliding axle that is accommodated to the pivotal accommodation groove. Furthermore, the sliding axle has a first pivot joint (for example, the pivot sleeves **244, 246)** hinging with the second pivot joint. With the first pivot joint of the sliding axle and the second pivot joint of the cover hidden inside the pivotal accommodation groove, the pivot structure is hardly damaged by external impact. Moreover, designing shiftable pivot structure to be hidden inside the base makes the handheld electronic device appear to be neater and more aesthetic.

In conclusion, major advantages of the shiftable pivot structure according to this invention includes:
1. The pivot joint of the cover and the pivot joint of the sliding axle are both hidden in the pivotal accommodation groove so that they are free from exposure and damage caused by external impact when the cover is closed. Moreover, this shiftable pivot structure appears to be neater for a handheld electronic device.
2. By shifting the sliding axle from an inner position to an outer position, the pivot sleeves and shaft are able to extrude from the base so that the cover serves to be opened for communication.

It will be apparent to those skilled in the art that various modifications and variations can be made to the structure of the present invention without departing from the scope of the invention. In view of the foregoing, it is intended that the present invention cover modifications and variations of this invention provided they fall within the scope of the following claims and their equivalents.

## Claims

1. A handheld electronic device, comprising:
a base (220) comprising a keypad (222) for inputting data and a pivotal accommodation groove (224) located at one end of the base;
a shiftable pivot structure (230) fitted in the pivotal accommodation groove (224) comprising a first pivot joint (244, 246) and being shiftable from a first position to a second position; and
a flip cover (210) comprising a display screen (214) for displaying data, and a second pivot joint (212) that is pivotably joined to the first pivot joint (244, 246)
**characterized in that**
said first pivot joint (244, 246) of the shiftable pivot structure (230) is located entirely within the pivotal accommodation groove (224) when the shiftable pivot structure is shifted to the first position, and located outside the pivotal accommodation groove when the shiftable pivot structure is shifted to the second position.

2. The handheld electronic device of claim 1, wherein the first pivot joint comprises two first pivot sleeves (244, 246) and a shaft (250), the second pivot joint comprises a second pivot sleeve (212), and the shaft extends in the first pivot sleeves and the second pivot sleeve.

3. The handheld electronic device of claim 1, wherein the flip cover is pivotable relative to the base when the shiftable pivot structure is shifted to the second position.

4. The handheld electronic device of claim 3, wherein the flip cover is pivotable relative to the base when the shiftable pivot structure is shifted to the second position.

5. A method of using a handheld wireless communication device which has a base (220) and a cover (210), the base having a keypad (222) thereon and the cover having a display (214) thereon, a shiftable pivot structure (230) slideably mounted in the base between first and second positions and pivotably connecting with the cover at a pivotal connecting point, the method comprising:
(a) moving the shiftable pivot structure (230) from the first position to the second position when then cover is closed to the base; and
(b) pivoting the cover (210) about the pivotal connecting point in a direction that the cover is away from the base (220) to thereby open the cover to a position that the handheld wireless communication device can be operated; **characterized in that** when the shiftable pivot structure (230) is at the first position, the pivotal connecting point is located in the base and when the shiftable pivot structure is at the second position, the pivotal connecting point is located outside the base.

6. The method of claim 5 further comprising the following steps after step (b):
(c) pivoting the cover about the pivotal connecting point in a direction that the cover is toward the base to thereby close the cover; and
(d) moving the shiftable pivot structure from the second position to the first position.

7. The method of claim 6, wherein the cover comprises a first pivot sleeve (212) and the shiftable pivot structure (230) comprises a second pivot sleeve (244, 246), a shaft (250) extending in the first and second pivot sleeves to pivotably connect the cover and the shiftable pivot structure together.

8. The method of claim 7, wherein the shiftable pivot structure has a U-shaped configuration.

## Patentansprüche

1. Handhaltbare elektronische Vorrichtung, umfassend:
ein Grundelement (220), umfassend ein Tastenfeld (222) zum Eingeben von Daten und einen zentralen Aufnahmeeinschnitt (224), angeordnet an einem Ende des Grundelements;
eine verschiebbare Schwenkstruktur (230), die in den zentralen Aufnahmeeinschnitt (224) eingepasst ist, eine erste Schwenkverbindung (244, 246) umfasst und verschiebbar von einer ersten Position in eine zweite Position ist; und
eine Klappabdeckung (210), umfassend einen Anzeigeschirm (214) zum Anzeigen von Daten und eine zweite Schwenkverbindung (212), die schwenkbar mit der ersten Schwenkverbindung (244, 246) verbunden ist,
**gekennzeichnet dadurch, dass**
die genannte erste Schwenkverbindung (244, 246) der verschiebbaren Schwenkstruktur (230) vollständig in dem zentralen Aufnahmeeinschnitt (224) angeordnet ist, wenn die verschiebbare Schwenkstruktur in die erste Position geschwenkt ist, und außerhalb des zentralen Aufnahmeeinschnitts angeordnet ist, wenn die verschiebbare Schwenkstruktur in die zweite Position geschwenkt ist.

2. Handhaltbare elektronische Vorrichtung gemäß Anspruch 1, bei der die erste Schwenkverbindung zwei erste Schwenkhülsen (244, 246) und einen Schaft (250) umfasst, die zweite Schwenkverbindung eine zweite Schwenkhülse (212) umfasst, und der Schaft sich in den ersten Schwenkhülsen und der zweite Schwenkhülse erstreckt.

3. Handhaltbare elektronische Vorrichtung gemäß Anspruch 1, bei der die Klappabdeckung in Bezug zum Grundelement schwenkbar ist, wenn die verschiebbare Schwenkstruktur in die zweite Position geschwenkt ist.

4. Handhaltbare elektronische Vorrichtung gemäß Anspruch 3, bei der die Klappabdeckung in Bezug zum Grundelement schwenkbar ist, wenn die verschiebbare Schwenkstruktur in die zweite Position geschwenkt ist.

5. Verfahrung zur Verwendung einer handhaltbaren drahtlosen Kommunikationsvorrichtung, die ein Grundelement (220) und eine Abdeckung (210) aufweist, wobei das Grundelement ein Tastenfeld (222) darauf aufweist und die Abdeckung eine Anzeige (214) darauf aufweist und eine verschiebbare Schwenkstruktur (230) schiebbar in dem Grundelement zwischen der ersten und der zweiten Position angebracht und schwenkbar mit der Abdeckung an einem zentralen Verbindungspunkt verbunden ist, wobei das Verfahren umfasst:
a) Bewegen der verschiebbaren Schwenkstruktur (230) von der ersten Position in die zweite Position, wenn die Abdeckung in Bezug auf das Grundelement geschlossen ist; und
b) Schwenken der Abdeckung (210) um den zentralen Verbindungspunkt in eine Richtung, sodass die Abdeckung von dem Grundelement (220) weg gerichtet ist, um dabei die Abdeckung in eine Position zu öffnen, sodass die handhaltbare drahtlose Kommunikationsvorrichtung verwendet werden kann;
**gekennzeichnet dadurch, dass**,
wenn die verschiebbare Schwenkstruktur (230) in der ersten Position ist, der zentrale Verbindungspunkt in dem Grundelement angeordnet ist, und wenn die verschiebbare Schwenkstruktur in der zweiter Position ist, der zentrale Verbindungspunkt außerhalb des Grundelements angeordnet ist.

6. Verfahren gemäß Anspruch 5, weiter umfassend folgende Schritte nach Schritt b):
c) Drehen der Abdeckung um den zentralen Verbindungspunkt in eine Richtung, dass die Abdeckung zum Grundelement hin gerichtet ist, um dabei die Abdeckung zu schließen; und
d) Bewegen der verschiebbaren Schwenkstruktur von der zweiten Position in die erste Position.

7. Verfahren gemäß Anspruch 6, bei der die Abdeckung eine erste Schwenkhülse (212) umfasst und die verschiebbare Schwenkstruktur (230) eine zweite Schwenkhülse (244, 246) umfasst, wobei ein Schaft (250) sich in den ersten Schwenkhülsen und in der zweite Schwenkhülse erstreckt, um die Abdeckung und die verschiebbare Schwenkstruktur schwenkbar miteinander zu verbinden.

8. Verfahren gemäß Anspruch 7, bei der die verschiebbare Schwenkstruktur eine U-förmige Konfiguration hat.

## Revendications

1. Dispositif électronique portatif, comprenant :
une base (220) comprenant un clavier (222) pour introduire des données et une gorge de logement de pivotement (224) située à une extrémité de la base ;
une structure de pivot décalable (230) insérée dans la gorge de logement de pivotement (224) comprenant une première articulation de pivot (244, 246) et étant décalable d'une première position à une seconde position ; et
un couvercle basculant (210) comprenant un écran d'affichage (214) pour afficher des données, et une seconde articulation de pivot (212) qui est articulée de façon pivotable à la première articulation de pivot (244, 246) **caractérisé en ce que**
ladite première articulation de pivot (244, 246) de la structure de pivot décalable (230) est située entièrement dans la gorge de logement de pivotement (224) lorsque la structure de pivot décalable est décalée à la première position, et située à l'extérieur de la gorge de logement de pivotement lorsque la structure de pivot décalable est décalée à la seconde position.

2. Dispositif électronique portatif selon la revendication 1, dans lequel la première articulation de pivot comprend deux premiers manchons de pivot (244, 246) et un arbre (250), la seconde articulation de pivot comprend un second manchon de pivot (212), et l'arbre s'étend dans les premiers manchons de pivot et le second manchon de pivot.

3. Dispositif électronique portatif selon la revendication 1, dans lequel le couvercle basculant est pivotable par rapport à la base lorsque la structure de pivot décalable est décalée à la seconde position.

4. Dispositif électronique portatif selon la revendication 3, dans lequel le couvercle basculant est pivotable par rapport à la base lorsque la structure de pivot décalable est décalée à la seconde position.

5. Procédé d'utilisation d'un dispositif de communication sans fil portatif qui a une base (220) et un couvercle (210) la base ayant un clavier (222) sur celle-ci et le couvercle ayant un affichage (214) sur celui-ci, une structure de pivot décalable (230) montée de façon coulissable dans la base entre les première et seconde positions et raccordant de façon pivotante le couvercle en un point de raccordement de pivotement, le procédé comprenant :
(a) le déplacement de la structure de pivot décalable (230) à partir de la première position à la seconde position lorsque le couvercle est fermé sur la base ; et
(b) le pivotement du couvercle (210) autour du point de raccordement de pivotement dans une direction où le couvercle est éloigné de la base (220) pour ouvrir ainsi le couvercle à une position où le dispositif de communication sans fil portatif peut être mis en fonctionnement ; **caractérisé en ce que** lorsque la structure de pivot décalable (230) est à la première position, le point de connexion de pivotement est situé dans la base et lorsque la structure de pivot décalable est à la seconde position, le point de connexion de pivotement est situé à l'extérieur de la base.

6. Procédé selon la revendication 5 comprenant en outre les étapes suivantes après l'étape (b) :
(c) le pivotement du couvercle autour du point de raccordement de pivotement dans une direction où le couvercle est vers la base pour fermer ainsi le couvercle ; et
(d) le déplacement de la structure de pivot décalable de la seconde position à la première position.

7. Procédé selon la revendication 6, dans lequel le couvercle comprend un premier manchon de pivot (212) et la structure de pivot décalable (230) comprend un second manchon de pivot (244, 246), un arbre (250) s'étendant dans les premier et second manchons de pivot pour raccorder ensemble de façon pivotante le couvercle à la structure de pivot décalable.

8. Procédé selon la revendication 7, dans lequel la structure de pivot décalable a une configuration en forme de U.
